# EUROPEAN PATENT SPECIFICATION

(11) **EP 4 446 708 B1**
(45) Date of publication and mention of the grant of the patent: **02.12.2026**
(21) Application number: 23167743.6
(22) Date of filing: 13.04.2023
(51) Int. Cl.: G01F 15/063, G01F 25/10, G01D 4/00

(54) **VALIDATING A READING FROM AN ANALOG FLOW METER**
VALIDIERUNG EINER ABLESUNG AUS EINEM ANALOGEN DURCHFLUSSMESSER
VALIDATION D'UNE LECTURE À PARTIR D'UN DÉBITMÈTRE ANALOGIQUE

(43) Date of publication of application: 16.10.2024
(73) Proprietor: Waltero Holding AB, 223 63 Lund (SE)
(72) Inventor: Storm, Kristian, 24562 HJÄRUP (SE); Lindoff, Bengt, 23735 BJÄRRED (SE)
(74) Representative: AWA Sweden AB

(56) References cited:
- US-A1- 2023 019 755
- US-B2- 10 612 940
- US-B2- 7 669 461
- LALL A KUMAR ET AL: "Making Analog Water Meter Smart using ML and IoT-based Low-Cost Retrofitting", 2021 8TH INTERNATIONAL CONFERENCE ON FUTURE INTERNET OF THINGS AND CLOUD (FICLOUD), IEEE, 23 August 2021 (2021-08-23), pages 157 - 162, XP034015604, [retrieved on 20211026], DOI: 10.1109/FICLOUD49777.2021.00030

## Description

### Technical field

The present invention relates to validating a reading from an analog flow meter. The analog flow meter being configured to measure a flow of a fluid in a supply line.

### Background

Most of the fluid flow meters of today, e.g. water and gas flow meters, are analog. Such fluid flow meters are fore example configured to measure an amount of water/gas consumed. Such fluid flow meters are configured to display the amount of water/gas consumed with analog numbers and/or analog pointers. Such analog flowmeters are typically not connected to a communication network and therefore collecting information about the consumption need to be done manually. This process is time consuming and costly. Therefore, information about the consumption is collected seldom, typically one or a few times per year.

This implies that the detection time for anomaly event such as possible leakages may take very long time with risk for wasting a significant amount of resources and/or inducing great damage.

Changing the analog flow meters to digital flow meters connected to a communication network is a solution to this problem. However, changing the analog flow meters to digital flow meters connected to a communication network comes with a cost and expertise knowledge since fluid flowing in the supply line need to be interrupted/stopped during replacement.

The document US 10 612 940 B2 discussed reading of flow meters using image recognition.

### Summary of the invention

According to a first aspect a method for validating a reading from an analog flow meter is provided. The method comprising: obtaining, at a measurement module arranged at the analog flow meter, a first measurement readout of analog numbers and/or analog pointers displayed by an analog display of the analog flow meter by analyzing an image captured by a digital camera unit of the measurement module; transmitting, via a communication network, the first measurement readout from the measurement module to a service server; analyzing, at the service server, the first measurement readout to check for discrepancy; upon the first measurement readout is indicative of discrepancy, transmitting, via the communication network, a validation request from the service server to the measurement module; initiating, at the measurement module, a validation check procedure. The validation check procedure comprising: obtaining, over a time period, a series of measurement readouts of the analog display of the analog flow meter by analyzing a series of images captured by the digital camera unit, and arranging the series of measurement readouts into a validation result. The validation result comprising one or more of: an array of measurement readouts, a function of the series of measurement readouts, and a logical conclusion based on the series of measurement readouts.

The validation request may comprise one or more of: a number of measurement readouts to be obtained for the validation check procedure, the time period during which the series of measurement readouts is to be performed, information pertaining to which function is to be fitted to the series of measurement readouts, information pertaining to how to draw the logical conclusion based on the series of measurement readouts, and a validation result transmission condition indicating upon which criteria the validation result is to be transmitted to the service server.

A number of measurement readouts for the series of measurement readouts and/or the time period during which the series of measurement readouts is to be performed may be pre-configured in the measurement module.

The first measurement readout may indicative of an discrepancy upon at least one of the following criteria is fulfilled: the measurement readout is empty, the measurement readout deviates from an expected measurement readout from the measurement module by a predetermined amount.

The function of the series of measurement readouts may be one or more of: a time dependent linear or spline function fitted to the series of measurement readouts, an average of consumption over the time period, and a variance of consumption over the time period.

Transmitting the validation request from the service server to the measurement module may be performed within a pre-configured time window from a receipt of the first measurement readout at the service server.

According to a second aspect a measurement module configured to report a reading from an analog flow meter is provided. The measurement module comprising: a digital camera unit configured to capture images of an analog display of the analog flow meter displaying analog numbers and/or analog pointers; a communication unit configured to communicate with a service server; and control circuitry configured to execute: a readout function configured to obtain a first measurement readout of the analog display of the analog flow meter by analyzing an image captured by the digital camera unit, a message function configured to, via the communication unit, communicate the first measurement readout to the service server, a validation function configured to initiate a validation check procedure. The validation check procedure comprising: instructing the readout function to, over a time period, obtain a series of measurement readouts of the analog display of the analog flow meter by analyzing a series of images captured by the digital camera unit, and arranging the series of measurement readouts into a validation result. The validation result comprising one or more of: an array of measurement readouts, a function of the series of measurement readouts, and a logical conclusion based on the series of measurement readouts.

The measurement module may be configured to be retrofitted to the analog flow meter such that the digital camera unit is able to capture images of the analog display of the analog flow meter.

A number of measurement readouts for the series of measurement readouts and/or the time period during which the series of measurement readouts is to be performed may be pre-configured in the measurement module.

The communication unit may be set to be idle for pre-configured time window after transmission of the first measurement readout and thereafter be set in a sleep-mode. By the communication unit set to be idle is meant that the communication unit is awake and is able to monitor for validation request from the server. The validation function may be configured to be triggered by a validation request received at the measurement module.

The validation function may be configured to extract a number of measurement readouts for the series of measurement readouts and/or the time period during which the series of measurement readouts is to be performed from the validation request.

The validation check procedure may further comprise comparing the validation result to a validation result transmission condition, and upon the validation result transmission condition is fulfilled transmitting the validation result to the service server.

The validation result transmission condition may be one or more of: always transmit the validation result, and transmit the validation result if the validation result deviates positively and/or negatively more than a threshold amount from a pre-configured value or a value received in a validation request.

The above mentioned features of the first aspect, when applicable, apply to this second aspect as well. In order to avoid undue repetition, reference is made to the above.

According to a third aspect a service server configured to interact with a plurality of measurement modules according to the second aspect is provided. The service server comprising: a communication unit configured to individually communicate with the plurality of measurement modules; and control circuitry configured to execute a discrepancy function configured to: analyze a measurement readout received from a specific measurement module to check for discrepancy, and upon the measurement readout is indicative of an discrepancy, generating a validation request. The communication unit is configured to transmit the validation request to the specific measurement module. By discrepancy is meant that the measurement readout is not an expected measurement readout. An example of a discrepancy is that a readout error has been made at the measurement module. For example the image captured by the digital camera unit may be faulty in some way, a bug or insect may be distorting the image, there may be condense or dirt present, etc. According to another example the analyzing algorithm analyzing the image may have been making a mistake. Another example of a discrepancy is that an anomaly has occurred. The anomaly may e.g. be a leak or a backdraft.

The discrepancy function may be configured to identify discrepancy upon at least one of the following criteria is fulfilled: the measurement readout is empty, and the measurement readout deviates from an expected measurement readout from the measurement module by a predetermined amount.

The above mentioned features of the first, second aspects, when applicable, apply to this third aspect as well. In order to avoid undue repetition, reference is made to the above.

According to a fourth aspect a flow monitoring system comprising a service server according to the third aspect and a plurality of measurement modules according to the second aspect is provided.

The above mentioned features of the first, second and third aspects, when applicable, apply to this fourth aspect as well. In order to avoid undue repetition, reference is made to the above.

A further scope of applicability will become apparent from the detailed description given below. However, it should be understood that the detailed description and specific examples are given by way of illustration only.

It is to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

The above and other aspects will now be described in more detail, with reference to appended figures. The figures should not be considered limiting; instead they are used for explaining and understanding.

As illustrated in the figures, the sizes of layers and regions may be exaggerated for illustrative purposes and, thus, are provided to illustrate the general structures. Like reference numerals refer to like elements throughout.
Fig. 1 schematically illustrates a fluid supply line with an analog flow meter connected thereto also a measurement module retrofitted to the analog flow meter is illustrated, the measurement module being connected to a service server over a communication network.
Fig. 2 schematically illustrates the measurement module of Fig. 1 in more detail.
Fig. 3 schematically illustrates the service server of Fig. 1 in more detail.
Fig. 4 is a block diagram of a method for validating a reading from an analog flow meter.

### Detailed description

The present invention will now be described more fully hereinafter with reference to the accompanying drawings, in which currently preferred embodiments of the invention are shown. This invention may, however, be embodied in many different forms.

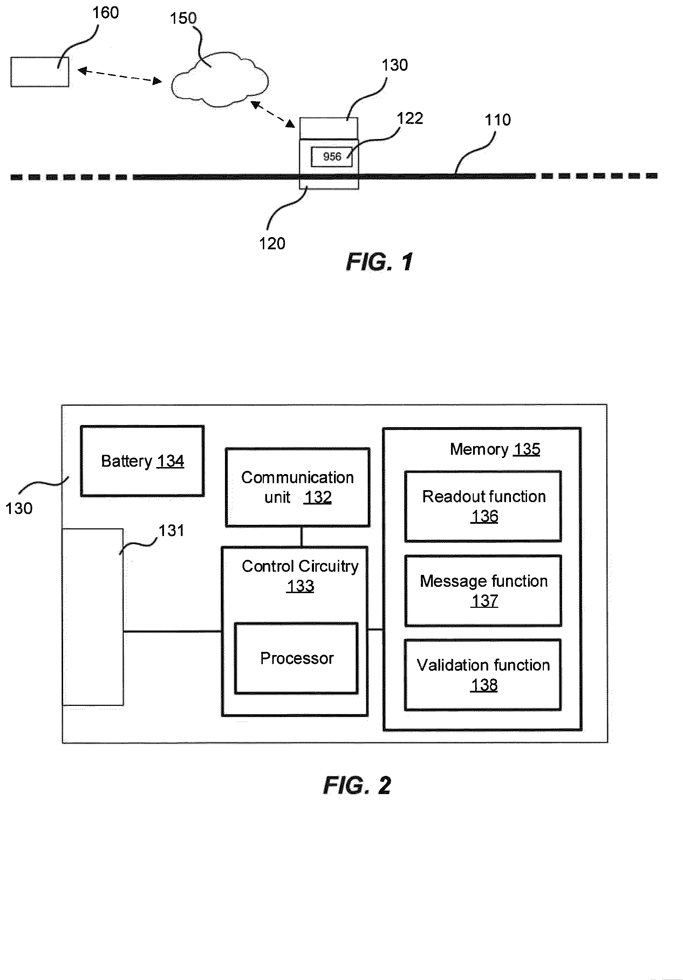

Fig. 1 illustrates a fluid supply line 110 with an analog flow meter 120 connected thereto. The analog flow meter 120 is configured to measure an amount of fluid flowing through the flow meter 120. That is, it can be said that the analog flow meter 120 is configured to measure an amount of fluid consumed. The analog flow meter 120 may e.g. be configured to measure a flow of water/gas flowing through a water/gas supply line. An accumulated value of the flow of fluid flowing through the supply line 110 may be displayed with analog numbers and/or analog pointers. The analog flow meter 120 typically mechanically measures a flow of a fluid in the supply line 110 and display the accumulated value of the flow of fluid flowing through the supply line 110 using analog number and/or analog pointers displayed on an analog display 122 of the analog flow meter 120. The analog flow meter 120 is typically not connected to a communication network and hence a readout of the accumulated flow measured by the analog flow meter 120 must be made manually.

In order to provide the ability to perform remote readout of the accumulated flow measured by the analog flow meter 120 a measurement module 130 is retrofitted to the analog flow meter 120. The measurement module 130 is disclosed in more detail in connection with Fig. 2. The measurement module 130 comprises a digital camera unit 131, a communication unit 132, a control circuitry 133 and a battery 134.

The measurement module 130 is retrofitted to the analog flow meter 120 such that the digital camera unit 131 is configured to capture images of the analog numbers and/or analog pointers displayed by the analog display 122 of the analog flow meter 120. Hence, the digital camera unit 131 is configured to capture images of the analog numbers and/or analog pointers displayed by the analog flow meter 120. The digital camera unit 131 may e.g. be a digital camera unit adopted for mobile electronic devices such as mobile phones, laptops, etc.

The communication unit 132 is configured to connect the measurement module 130 to a communication network 150, such as the Internet. Preferably, the communication unit 132 is a wireless communication unit set to communicate using one or more wireless communication protocols, such as Wi-Fi, LoRa, NB-loT, DASH7, and 2G-5G. This list of wireless communication protocols is not exhaustive, on the contrary any other present or future wireless communication protocol can be used. For some embodiments the communication unit 132 may alternatively or in combination be set to have a wired connection to the communication network. Particularly, the communication unit 132 is configured to communicate with a service server 160.

The control circuitry 133 is configured to carry out overall control of functions and operations of the measurement module 130. The control circuitry 133 may include a processor, such as a central processing unit (CPU), microcontroller, or microprocessor. The processor is configured to execute program code stored in a memory 135, in order to carry out functions and operations of measurement module 130.

The memory 135 may be one or more of a buffer, a flash memory, a hard drive, a removable medium, a volatile memory, a non-volatile memory, a random access memory (RAM), or another suitable device. In a typical arrangement, the memory 135 may include a non-volatile memory for long term data storage and a volatile memory that functions as system memory for the control circuitry 133. The memory 135 may exchange data with the control circuitry 133 over a data bus. Accompanying control lines and an address bus between the memory 135 and the control circuitry 133 also may be present.

Functions and operations of the measurement module 130 may be embodied in the form of executable logic routines (e.g., lines of code, software programs, etc.) that are stored on a non-transitory computer readable medium (e.g., the memory 135) of the measurement module 130 and are executed by the control circuitry 133 (e.g., using the processor). Furthermore, functions and operations of the measurement module 130 may be stand-alone software applications or form a part of a software application that carries out additional tasks related to the measurement module 130. The described functions and operations may be considered a method that the corresponding part of the measurement module 130 is configured to carry out. Also, while the described functions and operations may be implemented in software, such functionality may as well be carried out via dedicated hardware or firmware, or some combination of hardware, firmware and/or software.

The control circuitry 133 is configured to execute a readout function 136. The readout function 136 is configured to obtain a measurement readout of the analog numbers and/or analog pointers displayed by the analog flow meter 120. This by analyzing an image captured by the digital camera unit 131. Hence, the readout function 136 is configured perform an image analysis in order to extract text/digit information from image data in the images captured by the digital camera unit 131 indicative of the analog numbers and/or analog pointers displayed by the analog flow meter 120. The text/digit information being represented as digital information in the measurement readout.

The control circuitry 133 may be configured to execute the readout function 136 in order to obtain measurement readouts to be reported to the service server 160 with a certain rate, e.g., every 1, 6, 12, 24, 48 hours. The rate may be pre-configured and stored in the measurement module 130. Alternatively, the reporting rate may be received in a connection setup procedure with the service server 160.

The control circuitry 133 is further configured to execute a message function 137. The message function 137 is configured to, via the communication unit 132, communicate the measurement readout to the service server 160.

Hence, in order to be able to perform remote readouts of an analog flow meter 120 a measurement module 130 disclosed herein can be retrofitted thereto. The measurement module 130 is set to capture images of the analog numbers and/or analog pointers displayed by the analog flow meter 120 and then analyze the images in order to extract the analog numbers and/or analog pointers from the images. The extracted analog numbers and/or analog pointers may thereafter be transmitted to a service server. Retrofitting a measurement module as disclosed herein on an analog flow meter 120 can be made easily without expertise knowledge. The measurement module 130 is typically powered by a battery 134 in order to reduce the complexity of the installation even further.

The aim is to have a battery lifetime of at least 10 years in the measurement module 130. The communication unit 132 is typically consuming more power than the control circuitry 133, hence a good trade-off is to have the control circuitry 133 to perform analyzing of the images in order to extract the analog numbers and/or analog pointers from the images and the transmit the extract the analog numbers and/or analog pointers as digital information instead of transmitting the full images for analyzing at the service server 160. The measurement module 130 may be set to report new readouts every day or every week.

However, image analyzing made by the readout function 136 is not error free. Due to various reasons, such as condense on the glass, debris, insects, image analyzing flaws, etc. Hence, the measurement readout reported to the service server 160 may contain error. Anomalies from expected measurement readout may be detected at the service server 160. An anomaly may be indicative of that a high amount of consumed water/gas since last measurement readout. This may indicate a leakage (or similar), however an anomaly may alternatively be an error in the readout. In order to overcome such erroneous measurement readouts the measurement module 130 may be configured to transmit measurement readout on a frequent basis, e.g. once every minute. However this will significantly reduce the lifetime of the battery. In order to address this the measurement module 130 may be requested to perform a validation measurement. Hence, a request for a validation measurement may be sent to the measurement module 130 upon an anomality is detected at the service server 160.

Upon a measurement readout has been reported to the service server 160, the measurement module 130 may be set to monitor for a validation request, i.e., a request from the service server 160 that a validation check procedure is to be initiated. That is, the communication unit 132 of the measurement module 130 is set to monitor for validation request from the service server 160 during a pre-configured time window. The pre-configured time window is preferably short, in the order of seconds to minutes. By using such a short pre-configured time window the communication unit 132 can reduce the radio on time and hence save power by not need to monitor for a validation request longer than necessary. If a validation request is received, new measurements are made in order to validate the previously transmitted measurement readout reported to the service server 160.

Accordingly, the message function 137 is further configured to receive a validation request. The validation request is a message requesting the measurement module 130 to perform the validation check procedure.

The control circuitry 133 is further configured to execute a validation function 138. The validation function 138 is executed in response to a received validation request. Hence, the validation function 138 is configured to be triggered by a validation request received at the measurement module 130. The validation function 138 is configured to perform the validation check procedure. The validation check procedure comprises a series of measurement readouts performed over a time period. By performing a series of measurement readouts errors in one or more of the measurement readouts may be detected. Simply expressed, the statistics is increased giving a better basis for analysis is achieved. Hence, the validation function 138 instructs the readout function 136 to obtain the series of measurement readouts of the analog numbers and/or analog pointers displayed by the analog flow meter 120 at a number of time instances. Thus, the series of measurement readouts is obtained by analyzing images captured by the digital camera unit 131 at different points in time during a time period. The time period is typically in a range of 10 minutes to 1 hour, or a day 24 hours.. A number of measurement readouts is typically in a range of 2-10. One or both of the number of measurement readouts and the time period may be pre-configured in the measurement module 130. Alternatively, or in combination, one or both of the number of measurement readouts and the time period may be received in the validation request. Hence, the validation function 138 may be configured to extract a number of measurement readouts to be obtained for the validation check procedure, and/or the time period over which the validation check procedure is to be performed from the validation request. In case one or both of the number of measurement readouts and the time period is received in the validation request such received number of measurement readouts or time period may be set to overrule a, in the measurement module 130, pre-configured number of measurement readouts or time period.

The validation function 138 is further set to arrange the series of measurement readouts into a validation result. Hence, the validation check procedure further comprises to arrange the series of measurement readouts into a validation result. The validation result can take many different forms.

The validation result may comprise an array of the measurement readouts. This array may then be transmitted to the service server 160 for further analysis. Hence, the message function 137 may be configured to transmit the validation result in the form of array of the measurement readouts to the service server 160. The array of measurement readouts is then typically analyzed in more detail at the service server 160. This will be discussed in more detail in connection with the discussion of the service server 160 below.

Alternatively, or in combination, the validation result may comprise a function of the series of measurement readouts. The function of the series of measurement readouts may be one or more of: a time dependent linear or spline function fitted to the series of measurement readouts, an average of consumption over the time period, and a variance of consumption over the time period.

Alternatively, or in combination, the validation result may comprise a logical conclusion based on the series of measurement readouts.

The validation check procedure may further comprises comparing the validation result to a validation result transmission condition. Upon the validation result transmission condition is fulfilled the message function 137 is set to transmit the validation result to the service server 160. The validation result transmission condition may be pre-configured in the measurement module 130. Alternatively, the validation result transmission condition may be received in the validation request. The validation result transmission condition may take various forms. The validation result transmission condition may for example to always transmit the validation result. Another, validation result transmission condition may be to transmit the validation result if the validation result deviates positively and/or negatively more than a threshold amount from a pre-configured value or a value received in a validation request.

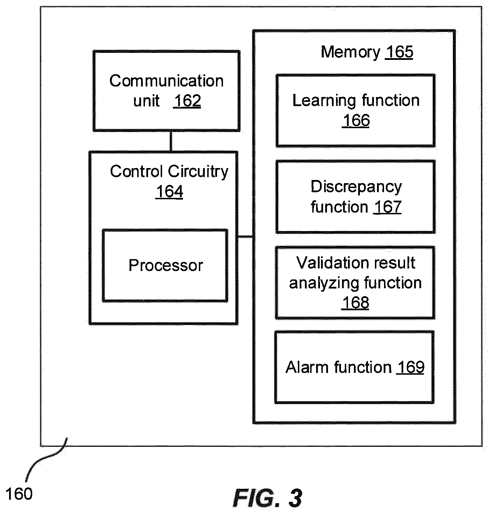

In connection with Fig. 3 the service server 160 will be discussed in more detail. The service server 160 is configured to interact with a plurality of measurement modules 130 discussed herein. The service server 160 comprises a communication unit 162 and control circuitry 164.

The communication unit 162 is configured to individually communicate with the plurality of measurement modules 130. The communication unit 162 is configured to connect the service server 160 to the communication network 150, such as the Internet. The communication unit 162 may be any type of communication unit 162 configured to be connected by wired or be wirelessly connected to the communication network 150.

The control circuitry 164 is configured to carry out overall control of functions and operations of the service server 160. The control circuitry 164 may include a processor, such as a central processing unit (CPU), microcontroller, or microprocessor. The processor is configured to execute program code stored in a memory 165, in order to carry out functions and operations of service server 160.

The memory 165 may be one or more of a buffer, a flash memory, a hard drive, a removable medium, a volatile memory, a non-volatile memory, a random access memory (RAM), or another suitable device. In a typical arrangement, the memory 165 may include a non-volatile memory for long term data storage and a volatile memory that functions as system memory for the control circuitry 164. The memory 165 may exchange data with the control circuitry 164 over a data bus. Accompanying control lines and an address bus between the memory 165 and the control circuitry 164 also may be present.

Functions and operations of the service server 160 may be embodied in the form of executable logic routines (e.g., lines of code, software programs, etc.) that are stored on a non-transitory computer readable medium (e.g., the memory 165) of the service server 160 and are executed by the control circuitry 164 (e.g., using the processor). Furthermore, functions and operations of the service server 160 may be stand-alone software applications or form a part of a software application that carries out additional tasks related to the service server 160. The described functions and operations may be considered a method that the corresponding part of the service server 160 is configured to carry out. Also, while the described functions and operations may be implemented in software, such functionality may as well be carried out via dedicated hardware or firmware, or some combination of hardware, firmware and/or software.

The control circuitry 164 may be configured to execute a learning function 166. The learning function 166 is configured to, from historical data, learned a behavior of consumed fluid during various time periods as monitored by a specific measurement module 130. From the historical data information, such as average and standard deviation, extreme max, extreme min of consumed fluid during a time period may been learned. The consumption behavior may be time dependent over a day, week, month or season, but estimated based on for instance statistical methods well known in the art. For example machine learning may be used for the learning. Hence, from the historical data thresholds for indicating anomaly can be determined. Such thresholds for indicating anomaly may be time dependent.

The control circuitry 164 is configured to execute a discrepancy function 167. The discrepancy function 167 configured to analyze a measurement readout received from a specific measurement module 130 to check for discrepancy. The discrepancy function 167 may be configured to, based on a comparison with learned behavior, detect an indicative anomaly of the consumption. This for example if the consumption passes the determined thresholds for indicating anomaly. For instance, the consumption may be significantly higher than the threshold for indicating anomaly since the last received measurement. This may be due to a leakage or a measurement error at the specific measurement module. The measurement readout may also be indicative of being lower than historical data, indicating either a problem with flow direction or a measurement error at the specific measurement module. Accordingly, the discrepancy function 167 may be set to analyze, the measurement readout to check for anomaly by comparing the measurement readout with historical data from the specific measurement module 130. Alternatively, or in combination, the discrepancy function 167 may be set to identify a readout error. This may e.g. be that the measurement readout received from the measurement module 130 is empty. Hence, the discrepancy function 167 may be configured to identify discrepancy upon at least one of the following criteria is fulfilled: the measurement readout is empty, and the measurement readout deviates from an expected measurement readout from the specific measurement module by a predetermined amount.

Upon the measurement readout is indicative of a discrepancy, the discrepancy function 167 is configured to generate a validation request. In addition to indicate for the specific measurement module 130 to initiate a validation check procedure, the validation request may comprise a number of measurement readouts for the series of measurement readouts and/or the time period during which the series of measurement readouts is to be performed. The validation request may contain a function, or an index indicating a function, the measurement module should 130 use for determining the validation result. The function may be based on the learned behavior of the fluid consumption. Also, a parameter set associated to a function, dependent on the learned behavior may be included in the validation request. Also an identity number of the specific measurement module 130 may be determined and the function and/or parameter included in the validation request may be determined based on the identity number. This could be the case if there are different software/hardware capabilities/versions in different measurement modules 130. That is the functions/parameters the specific measurement module can use in the validation check procedure may be software/hardware dependent. The validation request is discussed in more detail above and in order to avoid undue repetition reference is made to the above. The communication unit 162 is configured to transmit the validation request to the specific measurement module 130.

The control circuitry 164 may further be configured to execute a validation result analyzing function 168. The validation result analyzing function 168 is configured to analyze received validation result towards historical data. Based on this the discrepancy may be determined to be either a readout/measurement error or an anomaly, e.g., a leak, a back flow, etc. Depending on type of anomaly detected various alarms may be triggered using an alarm function 169.

The service server 160 and a plurality of measurement modules 130 may be set up into a flow monitoring system.

Improved battery lifetime for the measurement module may hence be achieved since uptime of communication unit is minimized and/or validation check procedure processing in the measurement module is minimized.

Further, increased tolerance for errors in the analyzing of the image captured by a digital camera unit of the measurement module without reducing battery lifetime is provided.

Moreover, by adapting the condition, function and/or parameter set optimized processing based on type of discrepancy may be achieved, again without degrading the battery lifetime.

By adapting the condition, function and/or parameter set to identity number of the specific measurement module improved analyzing methods can be applied to more advanced modules, thereby optimizing the validation performance per measurement module.

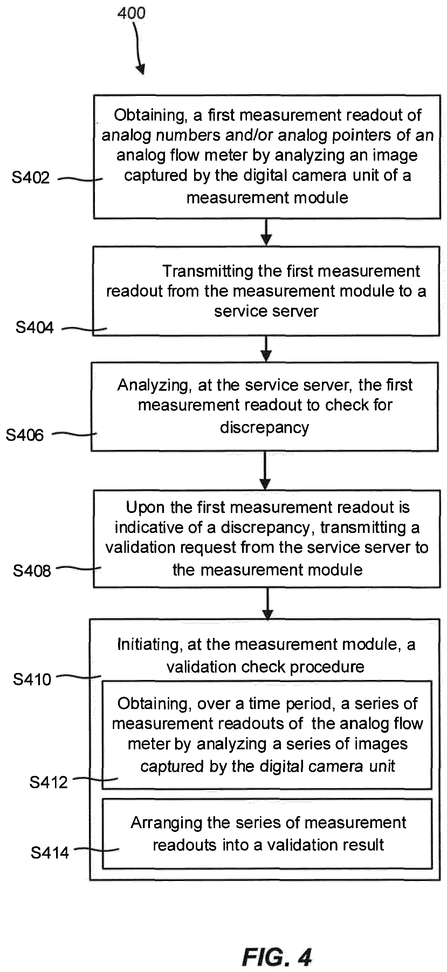

In connection with Fig. 4 a method 400 for validating a reading from an analog flow meter 120 will be discussed. The method 400 comprises the following steps. The steps may be performed in any suitable order.

Obtaining S402, at a measurement module 130 as discussed above a first measurement readout of analog numbers and/or analog pointers displayed by the analog display 122 of the analog flow meter 120 by analyzing an image captured by the digital camera unit 131 of the measurement module 130.

Transmitting S404, via the communication network 140, the first measurement readout from the measurement module 130 to a service server 160 as discussed above.

Analyzing S406, at the service server 160, the first measurement readout to check for discrepancy. The first measurement readout may be indicative of a discrepancy upon at least one of the following criteria is fulfilled: the measurement readout is empty, and the measurement readout deviates from an expected measurement readout from the measurement module by a predetermined amount. The checking for discrepancy is discussed in more detail above and in order to avoid undue repetition reference is made to the above.

Upon the first measurement readout is indicative of a discrepancy, transmitting S408, via the communication network 150, a validation request from the service server 160 to the measurement module 130. Transmitting S408 of the validation request may be performed within a pre-configured time window, see above, from a receipt of the first measurement readout at the service server 160. The validation request may comprise one or more of: a number of measurement readouts to be obtained for the validation check procedure, the time period during which the series of measurement readouts is to be performed, information pertaining to which function is to be fitted to the series of measurement readouts, information pertaining to how to draw the logical conclusion based on the series of measurement readouts, and a validation result transmission condition indicating upon which criteria the validation result is to be transmitted to the service server 160. The validation request is discussed in more detail above and in order to avoid undue repetition reference is made to the above.

Initiating S410, at the measurement module 130, a validation check procedure. The validation check procedure comprises obtaining S412, over a time period, a series of measurement readouts of the analog display 122 of the analog flow meter 120 by analyzing a series of images captured by the digital camera unit 131. A number of measurement readouts for the series of measurement readouts and/or the time period during which the series of measurement readouts is to be performed may be pre-configured in the measurement module 130. Alternatively, the number of measurement readouts to be obtained for the validation check procedure and/or the time period during which the series of measurement readouts is to be performed may be received via the validation request.

The validation check procedure further comprises arranging S414 the series of measurement readouts into a validation result. The validation result comprising one or more of: an array of measurement readouts, a function of the series of measurement readouts, and a logical conclusion based on the series of measurement readouts. The function of the series of measurement readouts may be one or more of: a time dependent linear or spline function fitted to the series of measurement readouts, an average of consumption over the time period, and a variance of consumption over the time period.

The person skilled in the art realizes that the present invention by no means is limited to what is explicitly described above. On the contrary, many modifications and variations are possible within the scope of the appended claims.

For example, the service server 160 may be configured to instruct measurement modules 130 to perform measurement readouts with a specific periodicity, e.g. every 1, 6, 12, 24, 48 hours. The service server 160 may be configured to set the measurement modules 130 to report at different times or at a same time.

Above, readouts from analog flow meters, such as water/gas flow meters have been discussed. It is however, understood that also other types of analog flow meters can be monitored using the measurement module 130 and service server 160 discussed above. One such example is an analog electricity meter.

Additionally, variations can be understood and effected by the skilled person in practicing the claimed invention, from a study of the drawings, the disclosure, and the appended claims.

## Claims

1. A method for validating a reading from an analog flow meter (120), the method comprising:
obtaining, at a measurement module (130) arranged at the analog flow meter (120), a first measurement readout of analog numbers and/or analog pointers displayed by an analog display (122) of the analog flow meter (120) by analyzing an image captured by a digital camera unit (131) of the measurement module (130);
transmitting, via a communication network (140), the first measurement readout from the measurement module (130) to a service server (160);
analyzing, at the service server (160), the first measurement readout to check for discrepancy;
**characterised in that**
upon the first measurement readout is indicative of a discrepancy, transmitting, via the communication network (150), a validation request from the service server (160) to the measurement module (130);
initiating, at the measurement module (130), a validation check procedure comprising:
obtaining, over a time period, a series of measurement readouts of the analog display (122) of the analog flow meter (120) by analyzing a series of images captured by the digital camera unit (131), and
arranging the series of measurement readouts into a validation result comprising one or more of:
an array of measurement readouts,
a function of the series of measurement readouts, and
a logical conclusion based on the series of measurement readouts.

2. The method according to claim 1, wherein the validation request comprises one or more of:
a number of measurement readouts to be obtained for the validation check procedure,
the time period during which the series of measurement readouts is to be performed,
information pertaining to which function is to be fitted to the series of measurement readouts,
information pertaining to how to draw the logical conclusion based on the series of measurement readouts, and
a validation result transmission condition indicating upon which criteria the validation result is to be transmitted to the service server (160).

3. The method according to claim 1 or 2, wherein the first measurement readout is indicative of a discrepancy upon at least one of the following criteria is fulfilled:
the measurement readout is empty,
the measurement readout deviates from an expected measurement readout from the measurement module by a predetermined amount.

4. The method according to any one of claims 1-3, wherein the function of the series of measurement readouts is one or more of:
a time dependent linear or spline function fitted to the series of measurement readouts,
an average of consumption over the time period, and
a variance of consumption over the time period.

5. The method according to any one of claims 1-4, wherein transmitting the validation request from the service server (160) to the measurement module (130) is performed within a pre-configured time window from a receipt of the first measurement readout at the service server (160).

6. A measurement module (130) configured to report a reading from an analog flow meter (120), the measurement module (130) comprising:
a digital camera unit (131) configured to capture images of an analog display (122) of the analog flow meter (120) displaying analog numbers and/or analog pointers;
a communication unit (132) configured to communicate with a service server (160); and
control circuitry (133) configured to execute:
a readout function (136) configured to obtain a first measurement readout of the analog display (122) of the analog flow meter (120) by analyzing an image captured by the digital camera unit (131),
a message function (137) configured to, via the communication unit (132), communicate the first measurement readout to the service server (160),
**characterised in that**
a validation function (138) configured to initiate a validation check procedure comprising:
instructing the readout function (136) to, over a time period, obtain a series of measurement readouts of the analog display (122) of the analog flow meter (120) by analyzing a series of images captured by the digital camera unit (131),
arranging the series of measurement readouts into a validation result comprising one or more of:
an array of measurement readouts,
a function of the series of measurement readouts, and
a logical conclusion based on the series of measurement readouts.

7. The measurement module (130) according to claim 6, wherein the measurement module (130) is configured to be retrofitted to the analog flow meter (120) such that the digital camera unit (131) is able to capture images of the analog display (122) of the analog flow meter (120).

8. The measurement module (130) according to claim 6 or 7, wherein a number of measurement readouts for the series of measurement readouts and/or the time period during which the series of measurement readouts is to be performed is pre-configured in the measurement module (130).

9. The measurement module according to any one of claims 6-8, wherein the communication unit (132) is set to be idle for pre-configured time window after transmission of the first measurement readout and thereafter be set in a sleep-mode, and wherein the validation function (138) is configured to be triggered by a validation request received at the measurement module (130).

10. The measurement module according to claim 9, wherein the validation function (138) is configured to extract a number of measurement readouts for the series of measurement readouts and/or the time period during which the series of measurement readouts is to be performed from the validation request.

11. The measurement module according to any one of claims 6-10, wherein the validation check procedure further comprises comparing the validation result to a validation result transmission condition, and upon the validation result transmission condition is fulfilled transmitting the validation result to the service server (160).

12. The measurement module according to claim 11, wherein the validation result transmission condition is one or more of:
always transmit the validation result,
transmit the validation result if the validation result deviates positively and/or negatively more than a threshold amount from a pre-configured value or a value received in a validation request.

13. A service server (160) configured to interact with a plurality of measurement modules (130) according to any one of claims 7-14, the service server (160) comprising:
a communication unit (162) configured to individually communicate with the plurality of measurement modules (164); and
control circuitry (164) configured to execute a discrepancy function (167) configured to:
analyze a measurement readout received from a specific measurement module (130) to check for discrepancy,
**characterised in that**
upon the measurement readout is indicative of a discrepancy, generating a validation request;
wherein the communication unit (162) is configured to transmit the validation request to the specific measurement module (130).

14. The service server according to claim 13, wherein the discrepancy function (167) is configured to identify discrepancy upon at least one of the following criteria is fulfilled:
the measurement readout is empty,
the measurement readout deviates from an expected measurement readout from the measurement module (130) by a predetermined amount.

15. A flow monitoring system comprising a service server (160) according to claim 13 or 14 and a plurality of measurement modules (130) according to any one of claims 6-12.

## Patentansprüche

1. Verfahren zur Validierung einer Ablesung von einem analogen Durchflussmesser (120), wobei das Verfahren umfasst:
an einem Messmodul (130), das an dem analogen Durchflussmesser (120) eingerichtet ist, Beziehen einer ersten Messauslesung von analogen Zahlen und/oder analogen Zeigern, die von einer analogen Anzeige (122) des analogen Durchflussmessers (120) angezeigt wird, durch Analysieren eines Bilds, das von einer digitalen Kameraeinheit (131) des Messmoduls (130) aufgenommen wird;
Übertragen der ersten Messauslesung von dem Messmodul (130) an einen Dienstserver (160) mittels eines Kommunikationsnetzwerks (140);
Analysieren der ersten Messauslesung an dem Dienstserver (160), um auf eine Diskrepanz zu prüfen;
**dadurch gekennzeichnet, dass**
wenn die erste Messauslesung eine Diskrepanz angibt, Übertragen einer Validierungsanforderung von dem Dienstserver (160) an das Messmodul (130) mittels des Kommunikationsnetzwerks (150);
Initiieren eines Validierungsprüfungsvorgangs an dem Messmodul (130), umfassend:
Beziehen einer Reihe von Messauslesungen der analogen Anzeige (122) des analogen Durchflussmessers (120) über einen Zeitraum durch Analysieren einer Reihe von Bildern, die von der digitalen Kameraeinheit (131) aufgenommen wird, und
Einrichten der Reihe von Messauslesungen zu einem Validierungsergebnis, umfassend eines bzw. eine oder mehrere von:
einem Array von Messauslesungen,
einer Funktion der Reihe von Messauslesungen und
einer logischen Schlussfolgerung auf der Basis der Reihe von Messauslesungen.

2. Verfahren nach Anspruch 1, wobei die Validierungsanforderung eine bzw. einen oder mehrere der folgenden umfasst:
eine Anzahl von Messauslesungen, die für den Validierungsprüfungsvorgang zu beziehen ist,
den Zeitraum, während dem die Reihe von Messauslesungen durchzuführen ist,
Informationen in Bezug darauf, welche Funktion an die Reihe von Messauslesungen anzupassen ist,
Informationen in Bezug darauf, wie die logische Schlussfolgerung auf der Basis der Reihe von Messauslesungen zu ziehen ist, und
eine Validierungsergebnisübertragungsbedingung, die angibt, bei welchen Kriterien das Validierungsergebnis an den Dienstserver (160) zu übertragen ist.

3. Verfahren nach Anspruch 1 oder 2, wobei die erste Messauslesung eine Diskrepanz angibt, bei der mindestens eines der folgenden Kriterien erfüllt ist:
die Messauslesung ist leer,
die Messauslesung weicht um einen vorbestimmten Betrag von einer erwarteten Messauslesung von dem Messmodul ab.

4. Verfahren nach einem der Ansprüche 1-3, wobei die Funktion der Reihe von Messauslesungen eine bzw. einer oder mehrere der folgenden ist:
eine zeitabhängige lineare oder Spline-Funktion, die an die Reihe von Messauslesungen angepasst wird,
ein Durchschnitt eines Verbrauchs über den Zeitraum und
eine Varianz eines Verbrauchs über den Zeitraum.

5. Verfahren nach einem der Ansprüche 1-4, wobei das Übertragen der Validierungsanforderung von dem Dienstserver (160) an das Messmodul (130) innerhalb eines vorkonfigurierten Zeitfensters von einem Empfang der ersten Messauslesung an dem Dienstserver (160) durchgeführt wird.

6. Messmodul (130), das dazu konfiguriert ist, eine Auslesung von einem analogen Durchflussmesser (120) zu melden, wobei das Messmodul (130) umfasst:
eine digitale Kameraeinheit (131), die dazu konfiguriert ist, Bilder einer analogen Anzeige (122) des analogen Durchflussmessers (120) aufzunehmen, die analoge Zahlen und/oder analoge Zeiger anzeigt;
eine Kommunikationseinheit (132), die dazu konfiguriert ist, mit einem Dienstserver (160) zu kommunizieren; und
Steuerschaltkreise (133), die konfiguriert sind zum Ausführen von:
einer Auslesungsfunktion (136), die dazu konfiguriert ist, eine erste Messauslesung der analogen Anzeige (122) des analogen Durchflussmessers (120) durch Analysieren eines Bilds, das von der digitalen Kameraeinheit (131) aufgenommen wird, zu beziehen,
eine Nachrichtenfunktion (137), die dazu konfiguriert ist, die erste Messauslesung mittels der Kommunikationseinheit (132) an den Dienstserver (160) zu kommunizieren,
**dadurch gekennzeichnet, dass**
eine Validierungsfunktion (138), die dazu konfiguriert ist, einen Validierungsprüfungsvorgang zu initiieren, umfassend:
Anweisen der Auslesungsfunktion (136), eine Reihe von Messauslesungen der analogen Anzeige (122) des analogen Durchflussmessers (120) über einen Zeitraum durch Analysieren einer Reihe von Bildern, die von der digitalen Kameraeinheit (131) aufgenommen wird, zu beziehen,
Einrichten der Reihe von Messauslesungen zu einem Validierungsergebnis, umfassend eines bzw. eine oder mehrere von:
einem Array von Messauslesungen,
einer Funktion der Reihe von Messauslesungen und
einer logischen Schlussfolgerung auf der Basis der Reihe von Messauslesungen.

7. Messmodul (130) nach Anspruch 6, wobei das Messmodul (130) dazu konfiguriert ist, an dem analogen Durchflussmesser (120) nachgerüstet zu werden, so dass die digitale Kameraeinheit (131) dazu in der Lage ist, Bilder der analogen Anzeige (122) des analogen Durchflussmessers (120) aufzunehmen.

8. Messmodul (130) nach Anspruch 6 oder 7, wobei eine Anzahl von Messauslesungen für die Reihe von Messauslesungen und/oder der Zeitraum, während dem die Reihe von Messauslesungen durchzuführen ist, in dem Messmodul (130) vorkonfiguriert sind.

9. Messmodul nach einem der Ansprüche 6-8, wobei die Kommunikationseinheit (132) dazu eingestellt ist, für ein vorkonfiguriertes Zeitfenster nach einer Übertragung der ersten Messauslesung inaktiv zu sein und danach in einen Schlafmodus versetzt zu werden, und wobei die Validierungsfunktion (138) dazu konfiguriert ist, durch eine Validierungsanforderung ausgelöst zu werden, die an dem Messmodul (130) empfangen wird.

10. Messmodul nach Anspruch 9, wobei die Validierungsfunktion (138) dazu konfiguriert ist, eine Anzahl von Messauslesungen für die Reihe von Messauslesungen und/oder den Zeitraum, während dem die Reihe von Messauslesungen durchzuführen ist, aus der Validierungsanforderung zu extrahieren.

11. Messmodul nach einem der Ansprüche 6-10, wobei der Validierungsprüfungsvorgang ferner ein Vergleichen des Validierungsergebnisses mit einer Validierungsergebnisübertragungsbedingung und, wenn die Validierungsergebnisübertragungsbedingung erfüllt ist, ein Übertragen des Validierungsergebnisses an den Dienstserver (160) umfasst.

12. Messmodul nach Anspruch 11, wobei die Validierungsergebnisübertragungsbedingung eines oder mehrere der folgenden ist:
stetiges Übertragen des Validierungsergebnisses,
Übertragen des Validierungsergebnisses, wenn das Validierungsergebnis um mehr als einen Schwellenbetrag positiv und/oder negativ von einem vorkonfigurierten Wert oder einem in einer Validierungsanforderung empfangenen Wert abweicht.

13. Dienstserver (160), der dazu konfiguriert ist, mit einer Vielzahl von Messmodulen (130) nach einem der Ansprüche 7-14 zu interagieren, wobei der Dienstserver (160) umfasst:
eine Kommunikationseinheit (162), die dazu konfiguriert ist, einzeln mit der Vielzahl von Messmodulen (164) zu kommunizieren; und
Steuerschaltkreise (164), die dazu konfiguriert sind, eine Diskrepanzfunktion (167) auszuführen, die konfiguriert ist zum:
Analysieren einer Messauslesung, die von einem spezifischen Messmodul (130) empfangen wird, um auf eine Diskrepanz zu prüfen,
**dadurch gekennzeichnet, dass**
wenn die Messauslesung eine Diskrepanz angibt, Erzeugen einer Validierungsanforderung,
wobei die Kommunikationseinheit (162) dazu konfiguriert ist, die Validierungsanforderung an das spezifische Messmodul (130) zu übertragen.

14. Dienstserver nach Anspruch 13, wobei die Diskrepanzfunktion (167) dazu konfiguriert ist, eine Diskrepanz zu identifizieren, bei der mindestens eines der folgenden Kriterien erfüllt ist:
die Messauslesung ist leer,
die Messauslesung weicht um einen vorbestimmten Betrag von einer erwarteten Messauslesung von dem Messmodul (130) ab.

15. Durchflussüberwachungssystem, umfassend einen Dienstserver (160) nach Anspruch 13 oder 14 und eine Vielzahl von Messmodulen (130) nach einem der Ansprüche 6-12.

## Revendications

1. Procédé de validation d'une lecture provenant d'un débitmètre analogique (120), le procédé comprenant :
l'obtention, par un module de mesure (130) agencé sur le débitmètre analogique (120), d'un premier relevé de mesure de nombres analogiques et/ou d'aiguilles analogiques affichés par un affichage analogique (122) du débitmètre analogique (120) en analysant une image capturée par une unité de caméra numérique (131) du module de mesure (130) ;
la transmission, via un réseau de communication (140), du premier relevé de mesure depuis le module de mesure (130) vers un serveur de service (160) ;
l'analyse, par le serveur de service (160), du premier relevé de mesure pour vérifier s'il y a une divergence ;
**caractérisé par**
lorsque le premier relevé de mesure indique une divergence, la transmission, via le réseau de communication (150), d'une requête de validation depuis le serveur de service (160) vers le module de mesure (130) ;
l'initiation, par le module de mesure (130), d'une procédure de vérification de validation comprenant :
l'obtention, sur une période donnée, d'une série de relevés de mesure de l'affichage analogique (122) du débitmètre analogique (120) en analysant une série d'images capturées par l'unité de caméra numérique (131), et
l'agencement de la série de relevés de mesure en un résultat de validation comprenant un ou plusieurs éléments parmi :
un ensemble de relevés de mesure,
une fonction de la série de relevés de mesure, et
une conclusion logique sur la base de la série de relevés de mesure.

2. Procédé selon la revendication 1, dans lequel la requête de validation comprend un ou plusieurs éléments parmi :
un nombre de relevés de mesure à obtenir pour la procédure de vérification de validation,
la période durant laquelle la série de relevés de mesure doit être effectuée,
de l'information relative à la fonction à ajuster à la série de relevés de mesure,
de l'information relative à la manière de tirer la conclusion logique sur la base de la série de relevés de mesure, et
une condition de transmission du résultat de validation indiquant sur quels critères le résultat de validation doit être transmis au serveur de service (160).

3. Procédé selon la revendication 1 ou 2, dans lequel le premier relevé de mesure indique une divergence lorsqu'au moins l'un des critères suivants est rempli :
le relevé de mesure est vide,
le relevé de mesure s'écarte d'un relevé de mesure attendu provenant du module de mesure d'une quantité prédéterminée.

4. Procédé selon l'une quelconque des revendications 1 à 3, dans lequel la fonction de la série de relevés de mesure est une ou plusieurs des fonctions suivantes :
une fonction linéaire ou spline dépendant du temps, ajustée à la série de relevés de mesure,
une moyenne de la consommation sur la période donnée, et
une variance de la consommation sur la période donnée.

5. Procédé selon l'une quelconque des revendications 1 à 4, dans lequel la transmission de la requête de validation depuis le serveur de service (160) vers le module de mesure (130) est effectuée pendant une fenêtre temporelle préconfigurée suivant la réception du premier relevé de mesure par le serveur de service (160).

6. Module de mesure (130) configuré pour rapporter une lecture provenant d'un débitmètre analogique (120), le module de mesure (130) comprenant :
une unité de caméra numérique (131) configurée pour capturer des images d'un affichage analogique (122) du débitmètre analogique (120) affichant des nombres analogiques et/ou des aiguilles analogiques ;
une unité de communication (132) configurée pour communiquer avec un serveur de service (160) ; et
une circuiterie de contrôle (133) configurée pour exécuter :
une fonction de relevé (136) configurée pour obtenir un premier relevé de mesure de l'affichage analogique (122) du débitmètre analogique (120) en analysant une image capturée par l'unité de caméra numérique (131),
une fonction de message (137) configurée pour, via l'unité de communication (132), communiquer le premier relevé de mesure au serveur de service (160),
**caractérisé par**
une fonction de validation (138) configurée pour initier une procédure de vérification de validation comprenant :
la commande à la fonction de relevé (136) d'obtenir, sur une période donnée, une série de relevés de mesure de l'affichage analogique (122) du débitmètre analogique (120) en analysant une série d'images capturées par l'unité de caméra numérique (131),
l'agencement de la série de relevés de mesure en un résultat de validation comprenant un ou plusieurs éléments parmi :
un ensemble de relevés de mesure,
une fonction de la série de relevés de mesure, et
une conclusion logique sur la base de la série de relevés de mesure.

7. Module de mesure (130) selon la revendication 6, dans lequel le module de mesure (130) est configuré pour être monté a posteriori sur le débitmètre analogique (120) de sorte que l'unité de caméra numérique (131) soit capable de capturer des images de l'affichage analogique (122) du débitmètre analogique (120).

8. Module de mesure (130) selon la revendication 6 ou 7, dans lequel un nombre de relevés de mesure pour la série de relevés de mesure et/ou la période durant laquelle la série de relevés de mesure doit être effectuée est préconfiguré dans le module de mesure (130).

9. Module de mesure selon l'une quelconque des revendications 6 à 8, dans lequel l'unité de communication (132) est configurée pour être au repos pendant une fenêtre temporelle préconfigurée après la transmission du premier relevé de mesure, puis mise en mode veille, et dans lequel la fonction de validation (138) est configurée pour être déclenchée par une requête de validation reçue par le module de mesure (130).

10. Module de mesure selon la revendication 9, dans lequel la fonction de validation (138) est configurée pour extraire de la requête de validation un nombre de relevés de mesure pour la série de relevés de mesure et/ou la période durant laquelle la série de relevés de mesure doit être effectuée.

11. Module de mesure selon l'une quelconque des revendications 6 à 10, dans lequel la procédure de vérification de validation comprend en outre la comparaison du résultat de validation à une condition de transmission du résultat de validation, et lorsque la condition de transmission du résultat de validation est remplie, la transmission du résultat de validation au serveur de service (160).

12. Module de mesure selon la revendication 11, dans lequel la condition de transmission du résultat de validation est une ou plusieurs des conditions suivantes :
la transmission systématique du résultat de validation,
la transmission du résultat de validation si le résultat de validation s'écarte, positivement et/ou négativement, d'une valeur préconfigurée ou d'une valeur reçue dans une requête de validation de plus d'une valeur seuil.

13. Serveur de service (160) configuré pour interagir avec une pluralité de modules de mesure (130) selon l'une quelconque des revendications 7 à 14, le serveur de service (160) comprenant :
une unité de communication (162) configurée pour communiquer individuellement avec la pluralité de modules de mesure (164) ; et
une circuiterie de contrôle (164) configurée pour exécuter une fonction de divergence (167) configurée pour :
analyser un relevé de mesure reçu d'un module de mesure spécifique (130) pour vérifier s'il y a une divergence,
**caractérisé par**
lorsque le relevé de mesure indique une divergence, la génération d'une requête de validation ;
dans lequel l'unité de communication (162) est configurée pour transmettre la requête de validation au module de mesure spécifique (130).

14. Serveur de service selon la revendication 13, dans lequel la fonction de divergence (167) est configurée pour identifier une divergence lorsqu'au moins l'un des critères suivants est rempli :
le relevé de mesure est vide,
le relevé de mesure s'écarte d'un relevé de mesure attendu provenant du module de mesure (130) d'une quantité prédéterminée.

15. Système de surveillance de débit comprenant un serveur de service (160) selon la revendication 13 ou 14 et une pluralité de modules de mesure (130) selon l'une quelconque des revendications 6 à 12.
